# EUROPEAN PATENT SPECIFICATION

(11) **EP 3 971 477 B1**
(45) Date of publication and mention of the grant of the patent: **06.11.2024**
(21) Application number: 21196132.1
(22) Date of filing: 10.09.2021
(51) Int. Cl.: F24B 1/02, A47B 37/04, A47J 37/07, F24C 15/30

(54) **A TABLE HAVING A HEATING APPLIANCE**
TISCH MIT EINEM HEIZGERÄT
TABLE ÉQUIPÉE D'UN APPAREIL CHAUFFANT

(30) Priority: 18.09.2020 US 202017025681; 22.09.2020 GB 202014940
(43) Date of publication of application: 23.03.2022
(73) Proprietor: The Cashmere Caveman Co, Wild Kitchens Limited, London W1C 1AX (GB)
(72) Inventor: Ritchie, Guy Stuart, London W1C 1AX (GB); True, Nigel, London W1C 1AX (GB)
(74) Representative: Bridge-Butler, Jeremy

(56) References cited:
- WO-A1-96/01395
- DE-U1- 202013 006 604
- DE-U1- 202014 008 980
- DE-U1- 202020 103 668
- FR-A- 1 570 591
- FR-A1- 2 288 504
- US-A- 2 768 042

## Description

The present invention relates to a table that can be used outdoors and that has a heating appliance.

GB 2566042 discloses such a table wherein the table has a heating appliance holder in the form of a container which holds a heating appliance and the heating appliance holder extends below an underside of the table top. Legs of the table are attached to the underside of the table top. Heat from the heating appliance may be conducted to the table top via the heating appliance holder which may damage the table top. The heating appliance is controlled by an actuator underneath the table top which may be difficult to operate when a person is seated by the table. Also, people in wheelchairs may find it difficult to sit around the table.

FR 2288504 discloses a hollow pedestal supporting an annular table top. A hearth is installed in the hollow pedestal and contains a fuel grid. A control plate for controlling the supply of air to the hearth is at the base of the hearth and is controlled by an actuator which is accessed by an opening by the bottom of the pedestal.

DE 202013006604 discloses a stove which has a cylindrical combustion chamber with a fire door. A cup shaped body is above the combustion chamber and supports an annular table top.

DE 202020103668 discloses a fire barrel comprising a cylindrical outer wall with a coal grate inside and an annular table top around the outside. The outer wall has an opening below the coal grate and the control of air into fire barrel is by changing the position of a cover plate that is connected to the outer wall by magnets.

FR 1570591 discloses a hollow pedestal supporting an annular table top. A cylindrical body is installed in the hollow pedestal and an outer wall of the body has a series of horizontally spaced air inlets which are above a movable fuel grid. A supply of air into the cylindrical body via the air inlets is controlled by a perforated ring being rotated by a radial arm beneath the table top.

It is an object of the present invention to provide a table having a heating appliance which can alleviate at least one of the above-mentioned problems.

According to the present invention there is provided a table comprising: a table top; a heating appliance comprising a fire box with a fire box chamber and a chamber opening at a top of said fire box for placing inside said fire box combustible fuel, such as wood or charcoal, with which said heating appliance is used, said fire box chamber having a combustible fuel holder, and said heating appliance having a first air inlet for supplying an air flow to said fire box chamber for combusting said combustible fuel, said first air inlet being through a side wall of said fire box; and a heating appliance holder holding said heating appliance, said heating appliance holder comprising a holder main body, and a table top holder for holding said table top, characterized in that said heating appliance includes a fire door for closing said opening; said heating appliance includes a second air inlet for supplying an air flow to said fire box chamber for combusting said combustible fuel, wherein said second air inlet is through said side wall of said fire box, and said first air inlet is above said combustible fuel holder and said second air inlet is below said combustible fuel holder; said heating appliance includes a first control valve adjacent said side wall of said fire box for controlling the supply of air through said first and second air flow inlets, and a first actuator for actuating said first control valve, wherein said first actuator extends above said holder main body; and said table top holder is spaced apart from said holder main body by at least one gap.

By the heating appliance holder having the at least one gap, this reduces heat being conducted to the table top from the heating appliance via the heating appliance holder which can prevent the table top from being charred. The least one gap also reduces heat being conducted to the table top holder. Air can flow through the at least one gap.

The at least one gap may be beneath the table top holder. The table top holder may extend at least partially around a perimeter of the heating appliance holder. There may be a series of said gaps spaced at least partially around the perimeter of the heating appliance holder. The table top holder may be above the holder main body.

The table top may cantilever from the heating appliance holder. This enables people in wheelchairs to be able to position themselves around the table. The table top may comprise at least two table top portions. The table top portions may be removable from the table top holder to save storage space such as when the table is being transported. The table top holder may comprise at least one groove for holding the table top portions. The table top portions may cantilever from the at least one groove. The groove may comprise an annular groove configured to extend around the heating appliance held by the heating appliance holder.

The heating appliance holder may include at least one leg.

The fire door may have a window. The window may allow an attractive view of flames from combusting fuel to be seen. The table can be used to produce a warm micro climate and visually pleasing ambience. The fire door may be substantially coplanar with an upper surface of the table top when the fire door is in a closed position.

The at least one side wall may surround the fire box chamber.

The combustible fuel holder may comprise a grate.

The first actuator may be fixed to or form an integral unit with the first control valve.

The table may include a third air inlet for supplying an air flow to the fire box chamber for combusting the combustible fuel wherein the third air inlet is on or through an underside of the fire box. The heating appliance may have a second control valve for controlling the supply of air through the third air inlet. The second control valve may be adjacent or mounted on the underside of the fire box. The table may include a second actuator for actuating the second control valve. The second actuator may extend above the table top or holder main body. The second actuator may be adjacent or mounted on the side wall of the fire box.

At least one of the actuators may extend above a top of the holder main body. At least one of the actuators may extend into or to be inside an area defined by the table top holder extending at least partially around a perimeter of the heating appliance holder.

By at least one of the first and second actuators extending above the table or holder main body, a person seated by the table can easily control the heating appliance.

The heating appliance may include a flue exhaust for emissions to exit from the fire box chamber.

The heating appliance may have a lower chamber beneath the fire box chamber. The lower chamber may be connected by at least one air conduit to the fire box chamber. The third air inlet may enter the lower chamber.

The holder main body may comprise at least one side wall which surrounds the heating appliance and a base. The heating appliance may be received on said base. There may be a second gap between the heating appliance and the at least one side wall of the heating appliance holder. The second gap may form an air gap or a heat insulation gap. The at least one side wall may have at least one aperture.

The at least one air inlet may be configured to receive air via the at least one wall aperture.

The heating appliance may be centrally positioned in the table top.

An embodiment of the present invention will now be described, by way of example, with reference to the accompanying schematic drawings, in which:
Figure 1 is a perspective view of a table according to one embodiment of the invention;
Figure 2 is a perspective view of an upper part of a holder of a heating appliance of the table;
Figure 3 is a longitudinal sectional view taken along lines 3-3 of Figure 1 wherein an upper part of a flue of the heating appliance of the table is omitted;
Figures 4 and 5 are cross-sectional views taken along lines 4-4 and 5-5, respectively, of Figure 3;
Figure 6 is a view of an underside of a part of the heating appliance; and
Figures 7 to 9 are views of a control valve and actuator of the heating appliance in various positions.

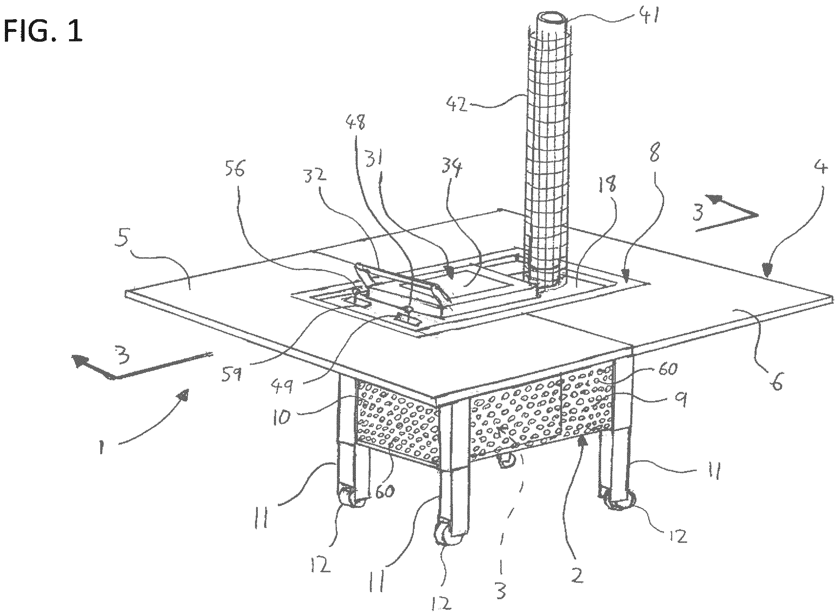

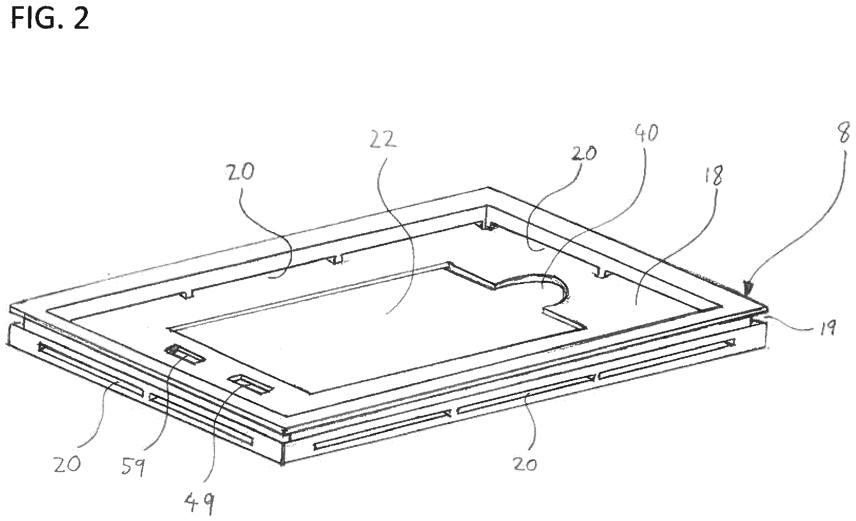

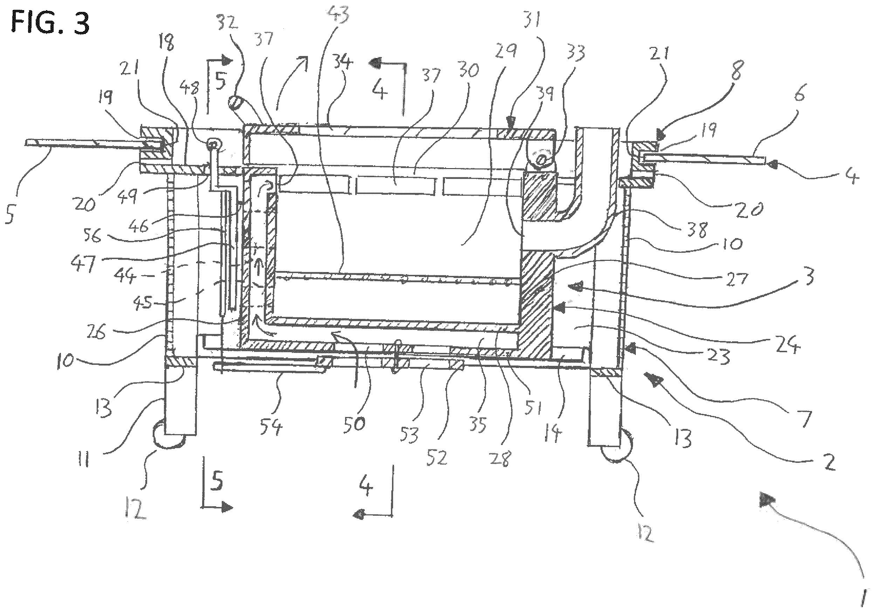

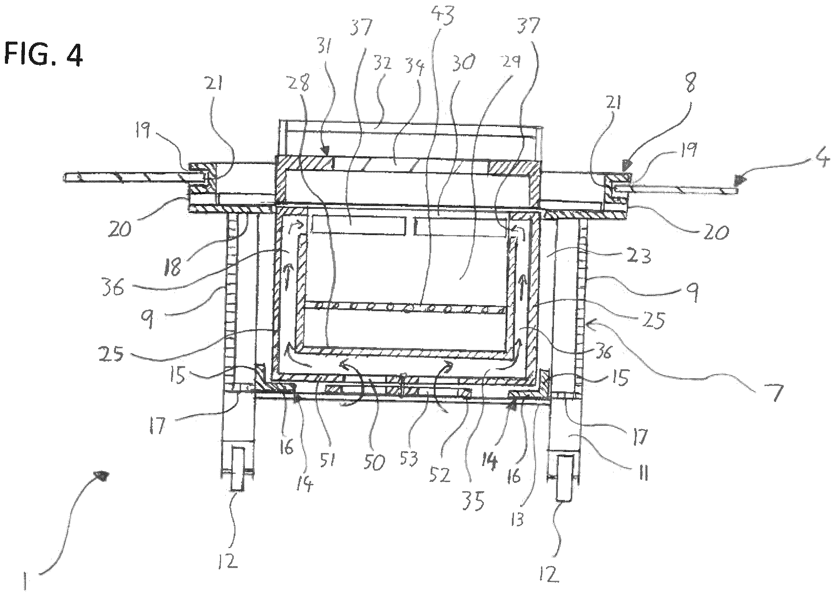

Referring to Figures 1 to 6 of the accompanying drawings, a table 1 comprises a heating appliance holder or safety cage 2, a heating appliance or stove or burner 3 held by the holder 2, and a rectangular table top 4 which comprises a pair of table top portions 5, 6. The heating appliance 3 and the heating appliance holder 2 form separate, discrete units.

The heating appliance holder 2 comprises a holder main body 7 and a table top holder 8 above for holding the table top 4.

The holder main body 7 is cuboid in shape and comprises two longitudinal side walls 9, two end walls 10 and a leg 11 at each corner wherein each leg 11 extends below the walls 9, 10 and terminates with a wheel 12. A strut 13 connects the legs 11 on either side of each end wall 10 and the strut 13 is just below the end wall 10. An L-shaped rail 14 extends between the legs 11 on each side of the longitudinal side wall 9 and has an upright 15 and a flange 16. The back of the upright 15 of the rail 14 is fixed to an inside surface of each of the legs 11. The bottom of each longitudinal side wall 9 has a return 17 which ends at the back of the rail upright 15. The longitudinal side walls 9 and the end walls 10 have many apertures 60.

The tops of the legs 11 and the longitudinal side walls 9 and end walls 10 are connected to the underside of a rectangular sheet 18 which extends outwardly beyond the walls 9, 10 and legs 11 and which forms part of the holder main body 7. The sheet 18 forms a top of the holder main body 7. On the opposite side of the sheet 18, the table top holder 8 in the form of a C-shaped member extends around the perimeter of the sheet 18 wherein the C-shaped member forms an annular groove 19 which faces outwardly. The table top holder 8 is spaced apart from the sheet 18 beneath by a series of gaps 20 spaced along the perimeter.

Each table top portion 5, 6 has a recess which enables an inside edge 21 of the table top portion 5, 6 to be slotted into groove 19 so that the table top portion 5, 6 is held by the groove 19 and cantilevers from the groove 19. When the inside edge 21 of both table top portions 5, 6 are fully inserted into the groove 19 the table top portions 5, 6 form the rectangular table top 4.

The sheet 18 has a substantially rectangular opening 22 to enable the main body 7 of the heating appliance holder 2 to receive the heating appliance 3. The heating appliance 3 sits on the flanges 16 of the two rails 14 between the uprights 15, and a base of the holder main body 7 comprises the rails 14. The heating appliance 3 is surrounded by the walls 9, 10 of the heating appliance holder 2 and there is a gap 23 between the walls 9, 10 of the heating appliance holder 2 and the heating appliance 3.

The heating appliance 3 comprises a fire box 24 having two longitudinal side walls 25, first and second end side walls 26, 27 and a floor 28 which define a chamber 29 of the fire box 24 wherein the walls 25, 26, 27 define an opening 30 to the chamber 29 at the top. A fire door 31 is hinged to the top of the second end wall 27 and used to close the chamber opening 30. The fire door 31 has a handle 32 distal to the hinged connection 33 to the second end wall 27. The fire door 31 has a window 34, and is substantially coplanar with an upper surface of the table top 4 when the fire door 31 is in a closed position.

The two longitudinal side walls 25, and the first end wall 26 are cavity walls. The heating appliance 3 has a lower chamber 35 beneath the floor 28 of the fire box chamber 29 and the lower chamber 35 extends to the cavities 36 of the longitudinal side walls 25 and the first end wall 26. The cavities 36 are connected to openings or outlets 37 into the fire box chamber 29 in an upper portion of the longitudinal side walls 25 and the first end wall 26.

A flue base 38 extends from an opening 39 in the second end wall 27 and the flue base 38 initially bends through 90 degrees before it extends upwards through an extension 40 to the sheet opening 22. A flue extension 41 extends upwards from the flue base 38 and the flue extension 41 and a portion of the flue base 38 which extends above the sheet 22 is surrounded by a cylindrical mesh 42. The flue base 38 and flue extension 41 form an exhaust for emissions to exit from the fire box chamber 29 and directs emissions or smoke away from people sitting around the table 1.

A rack (not shown) may be attached to the flue extension 41 or the surrounding mesh 42. The rack may have hooks from which, say, bowls and utensils can be hung.

The fire box chamber 29 has a grate 43 which is spaced above the floor 28 of the fire box chamber 29. A first air inlet conduit 44 extends from the outside of the fire box 24, through the first end wall 26 and into the fire box chamber 29 above the grate 43, and a second air inlet conduit 45 extends from the outside of the fire box 24, through the first end wall 26 and into the fire box chamber 29 below the grate 43. Both the first and second air inlet conduits 44, 45 are rectangular in shape. The longitudinal sides of the first air inlet conduit 44 are inclined at an acute angle to the vertical towards a first pivot connection 46 on the first end wall 26. The longitudinal sides of the second air inlet conduit 45 are parallel to the bottom of the fire box 24 and the second air inlet conduit 45 is positioned below the first air inlet conduit 44 and is further away from the first pivot connection 46 than the first air inlet conduit 44.

A first control valve 47 is mounted on the first pivot connection 46 on the outside of the first end wall 26 and is shaped so that it can cover an entrance to just the first air inlet conduit 44 or both the first and second air inlet conduits 44, 45 or neither air inlet conduit depending on which position the first control valve 47 is rotated to about the first pivot connection 46. The first control valve 47 is connected to a first actuator or lever 48 which extends upwards through a first slot 49 in the sheet 18 of the heating appliance holder 2. The first control valve 47 and first actuator 48 form an integral unit.

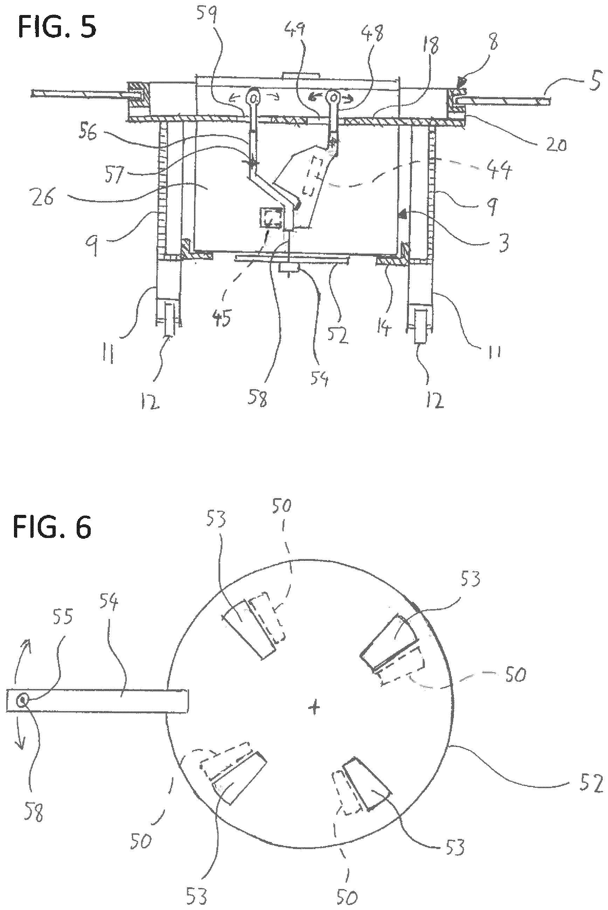

The underside of the heating appliance 3 has a plurality of radial openings or inlets 50 extending into the lower chamber 34 through a floor 51 of the lower chamber 34. A second control valve 52 (see Fig. 6) in the form of a disc is rotatably mounted on the underside of the heating appliance 3 and has a plurality of radial openings 53 which corresponds to the radial openings 50 in the underside of the heating appliance 3. The disc 52 is between the rails 14 of the heating appliance holder 2. A rod 54 extends from the disc 52 and extends beyond the bottom of the first end wall 26 of the fire box 24. A distal end of the rod 54 has an aperture 55.

A second actuator or lever 56 is mounted on a second pivot connection 57 on the outside of the first end wall 26 and a pin 58 forms a bottom of the second actuator 56 which is received in the aperture 55 in the distal end of the rod 54. The second actuator 56 extends upwards through a second slot 59 in the sheet 18 of the heating appliance holder 2.

In use, the fire door 31 of the heating appliance 3 is opened and combustible solid fuel is placed on the grate 43 inside the fire box chamber 29.

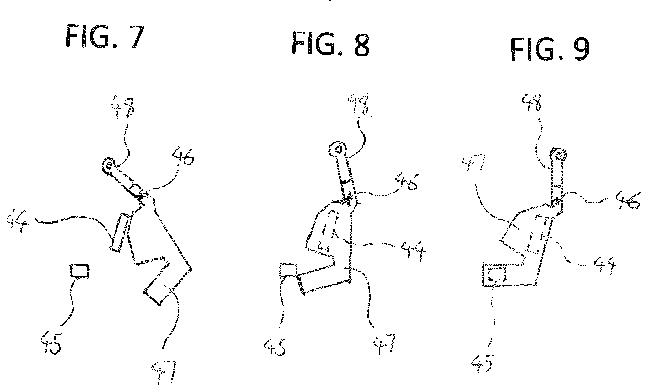

Where the combustible fuel is charcoal, the first actuator 48 may be used to ensure that the first control valve 47 does not cover the entrances to the first and second air inlet conduits 44, 45 (see Figure 7) and the second actuator 56 may be used to ensure that the second control valve 52 has been rotated into a position so that it covers the heating appliance radial openings 50. Air is received in the fire box chamber 29 from outside the table 1 via the apertures 60 in the end wall 10 of the heating appliance holder 2 in front of the first end wall 26 of the heating appliance 3 and via the first and second air inlet conduits 44, 45. The combustible solid fuel is ignited, and the first actuator 48 is used to rotate the first control valve 47 about the first pivot connection 46 so that the first control valve 47 just covers the entrance to the first air inlet conduit 44 (see Figure 8). The first actuator 48 can then be used to rotate the first control valve 47 so that it partially covers the entrance to the second air inlet conduit 45 as well as fully covering the entrance to the first air inlet conduit 44 in order to control the burning of the charcoal and the amount of heat produced.

Where the combustible fuel is wood, the first actuator 48 is used to rotate the first control valve 47 so that it covers the entrances to both the first and second air inlet conduits 44, 45 (see Figure 9) and the second actuator 56 is used to rotate the second control valve 52 so that it can at least partially cover the heating appliance radial openings 50 in order to control the burning of the wood and the amount of heat produced.

In a specific example of a preferred embodiment, the gaps 20 between the table top holder 8 and the sheet 18 below may be 2 mm in height. The table top portions 5, 6 may comprise wood.

Whilst a particular embodiment has been described, it will be understood that various modifications may be made without departing from the scope of the claimed invention.

The heating appliance, the heating appliance holder and the table top may have different shapes from that shown. For example, the heating appliance may be a substantially cube shape, and the table top may be substantially square.

At least one of the legs may not have a wheel.

## Claims

1. A table (1) comprising: a table top (4); a heating appliance (3) comprising a fire box (24) with a fire box chamber (29) and a chamber opening (30) at a top of said fire box (24) for placing inside said fire box (24) combustible fuel with which said heating appliance (3) is used, said fire box chamber (29) having a combustible fuel holder (43), and said heating appliance having a first air inlet (44) for supplying an air flow to said fire box chamber (29) for combusting said combustible fuel, said first air inlet (44) being through a side wall (26) of said fire box (24); and a heating appliance holder (2) holding said heating appliance (3), said heating appliance holder (2) comprising a holder main body (7), and a table top holder (8) for holding said table top (4),
**characterized in that**
said heating appliance (3) includes a fire door (31) for closing said opening (30);
said heating appliance (3) includes a second air inlet (45) for supplying an air flow to said fire box chamber (29) for combusting said combustible fuel, wherein said second air inlet (45) is through said side wall (26) of said fire box (24), and said first air inlet (44) is above said combustible fuel holder (43) and said second air inlet (45) is below said combustible fuel holder (43);
said heating appliance (3) includes a first control valve (47) adjacent said side wall (26) of said fire box (24) for controlling the supply of air through said first and second air flow inlets (44, 45), and a first actuator (48) for actuating said first control valve (47), wherein said first actuator (48) extends above said holder main body (7); and
said table top holder (8) is spaced apart from said holder main body (7) by at least one gap (20).

2. The table as claimed in claim 1, wherein said at least one gap (20) is beneath said table top holder (8).

3. The table as claimed in claim 1 or 2, wherein said table top holder (8) extends at least partially around a perimeter of said heating appliance holder (2), and said heating appliance holder (2) has a series of said gaps (20) spaced at least partially around said perimeter of said heating appliance holder (2).

4. The table as claimed in claim 1, 2 or 3, wherein said first actuator (48) is fixed to said first control valve (47).

5. The table as claimed in any preceding claim, including a third air inlet (50) for supplying an air flow to said fire box chamber (29) for combusting said combustible fuel wherein said third air inlet (50) is through an underside of said fire box (24).

6. The table as claimed in claim 5, wherein said heating appliance (3) has a second control valve (52) for controlling the supply of air through said third air inlet (50), and a second actuator (56) for actuating said second control valve (52), wherein said second actuator (56) extends above said holder main body (7).

7. The table as claimed in claim 6, wherein said second actuator (56) is adjacent said side wall (26) of said fire box (24).

## Patentansprüche

1. Tisch (1), umfassend: eine Tischplatte (4); eine Heizvorrichtung (3), die eine Feuerbox (24) mit einer Feuerboxkammer (29) und einer Kammeröffnung (30) an einer Oberseite der Feuerbox (24) umfasst, um in die Feuerbox (24) brennbaren Heizstoff zu legen, mit dem die Heizvorrichtung (3) verwendet wird, wobei die Feuerboxkammer (29) eine Halterung (43) für brennbaren Heizstoff hat und die Heizvorrichtung einen ersten Lufteinlass (44) zum Zuführen eines Luftstroms zu der Feuerboxkammer (29) zum Verbrennen des brennbaren Heizstoffs hat, wobei der erste Lufteinlass (44) durch eine Seitenwand (26) der Feuerbox (24) führt; und eine Heizvorrichtungshalterung (2), welche die Heizvorrichtung (3) hält, wobei die Heizvorrichtungshalterung (2) einen Halterungs-Hauptkörper (7) und eine Tischplattenhalterung (8) zum Halten der Tischplatte (4) hat,
**dadurch gekennzeichnet, dass**
die Heizvorrichtung (3) eine Feuertür (31) zum Verschließen der Öffnung (30) hat,
die Heizvorrichtung (3) einen zweiten Lufteinlass (45) zum Zuführen eines Luftstroms zu der Feuerboxkammer (29) zum Verbrennen des brennbaren Heizstoffs aufweist, wobei der zweite Lufteinlass (45) durch die Seitenwand (26) der Feuerbox (24) führt, und der erste Lufteinlass (44) oberhalb der Halterung (43) für brennbaren Heizstoff ist und der zweite Lufteinlass (45) unterhalb der Halterung (43) für brennbaren Heizstoff ist;
die Heizvorrichtung (3) ein erstes Steuerventil (47) neben der Seitenwand (26) der Feuerbox (24) zum Steuern der Luftzufuhr durch den ersten und den zweiten Lufteinlass (44, 45), und ein erstes Betätigungselement (48) zum Betätigen des ersten Steuerventils (47) aufweist, wobei sich das erste Betätigungselement (48) über den Halterungs-Hauptkörper (7) hinaus erstreckt; und
die Tischplattenhalterung (8) von dem Halterungs-Hauptkörper (7) um mindestens einen Spalt (20) beabstandet ist.

2. Tisch gemäß Anspruch 1, wobei der mindestens eine Spalt (20) unterhalb des Tischplattenhalters (8) angeordnet ist.

3. Tisch gemäß Anspruch 1 oder 2, wobei sich der Tischplattenhalter (8) mindestens teilweise um einen umlaufenden Rand der Heizvorrichtungshalterung (2) erstreckt und die Heizvorrichtungshalterung (2) eine Reihe der Spalten (20) hat, die mindestens teilweise um den umlaufenden Rand der Heizvorrichtungshalterung (2) herum beabstandet sind.

4. Tisch gemäß Anspruch 1, 2 oder 3, wobei das erste Betätigungselement (48) an dem Steuerventil (47) befestigt ist.

5. Tisch gemäß einem der vorhergehenden Ansprüche, aufweisend einen dritten Lufteinlass (50) zum Zuführen eines Luftstroms zu der Feuerboxkammer (29) zum Verbrennen des brennbaren Heizstoffs, wobei der dritte Lufteinlass (50) durch eine Unterseite der Feuerbox (24) führt.

6. Tisch gemäß Anspruch 5, wobei die Heizvorrichtung (3) ein zweites Steuerventil (52) zum Steuern der Luftzufuhr durch den dritten Lufteinlass (50), und ein zweites Betätigungselement (56) zum Betätigen des zweiten Steuerventils (52) hat, wobei sich das zweite Betätigungselement (56) über den Halterungs-Hauptkörper (7) hinaus erstreckt.

7. Tisch gemäß Anspruch 6, wobei das zweite Betätigungselement (56) neben der Seitenwand (26) der Feuerbox (24) angeordnet ist.

## Revendications

1. Table (1) comprenant : un plateau de table (4); un appareil chauffant (3) comprenant un foyer (24) avec une chambre de foyer (29) et une ouverture de chambre (30) au niveau d'un sommet dudit foyer (24) pour placer à l'intérieur dudit foyer (24), un combustible avec lequel ledit appareil chauffant (3) est utilisé, ladite chambre de foyer (29) ayant un support de combustible (43), et ledit appareil chauffant ayant une première entrée d'air (44) pour fournir un flux d'air à ladite chambre de foyer (29) pour brûler ledit combustible, ladite première entrée d'air (44) étant à travers une paroi latérale (26) dudit foyer (24) ; et un support d'appareil chauffant (2) maintenant ledit appareil chauffant (3), ledit support d'appareil chauffant (2) comprenant un corps principal de support (7), et un support de plateau de table (8) pour maintenir ledit plateau de table (4),
**caractérisée en ce que** :
ledit appareil chauffant (3) comprend une porte de foyer (31) pour fermer ladite ouverture (30) ;
ledit appareil chauffant (3) comprend une deuxième entrée d'air (45) pour fournir un flux d'air à ladite chambre de foyer (29) pour brûler ledit combustible, dans laquelle ladite deuxième entrée d'air (45) est à travers ladite paroi latérale (26) dudit foyer (24), et ladite première entrée d'air (44) est au-dessus dudit support de combustible (43) et ladite deuxième entrée d'air (45) est au-dessous dudit support de combustible (43) ;
ledit appareil chauffant (3) comprend une première valve de réglage (47) adjacente à ladite paroi latérale (26) dudit foyer (24) pour régler l'alimentation en air à travers lesdites première et seconde entrées de flux d'air (44, 45), et un premier actionneur (48) pour actionner ladite première valve de réglage (47), dans laquelle ledit premier actionneur (48) s'étend au-dessus dudit corps principal de support (7) ; et
ledit support de plateau de table (8) est espacé dudit corps principal de support (7) par au moins un interstice (20).

2. Table selon la revendication 1, dans laquelle ledit au moins un interstice (20) est au-dessous dudit support de plateau de table (8).

3. Table selon la revendication 1 ou 2, dans laquelle ledit support de plateau de table (8) s'étend au moins partiellement autour d'un périmètre dudit support d'appareil chauffant (2), et ledit support d'appareil chauffant (2) a une série desdits interstices (20) espacés au moins partiellement autour dudit périmètre dudit support d'appareil chauffant (2).

4. Table selon la revendication 1, 2 ou 3, dans laquelle ledit premier actionneur (48) est fixé sur ladite première valve de réglage (47).

5. Table selon l'une quelconque des revendications précédentes, comprenant une troisième entrée d'air (50) pour fournir un flux d'air à ladite chambre de foyer (29) pour brûler ledit combustible, dans laquelle ladite troisième entrée d'air (50) est à travers une face inférieure dudit foyer (24).

6. Table selon la revendication 5, dans laquelle ledit appareil chauffant (3) a une seconde valve de réglage (52) pour régler l'alimentation en air à travers ladite troisième entrée d'air (50) et un second actionneur (56) pour actionner ladite seconde valve de réglage (52), dans laquelle ledit second actionneur (56) s'étend au-dessus dudit corps principal de support (7).

7. Table selon la revendication 6, dans laquelle ledit second actionneur (56) est adjacent à ladite paroi latérale (26) dudit foyer (24).
